# FASCICULE DE BREVET EUROPEEN

(11) **EP 2 695 147 B1**
(45) Date de publication et mention de la délivrance du brevet: **06.03.2019**
(21) Numéro de dépôt: 12712293.5
(22) Date de dépôt: 19.03.2012
(51) Int. Cl.: G07D 7/202, G07D 7/00, G07D 7/12, G06K 9/78, G06K 19/08

(54) **CODE-BARRES DE SÉCURITÉ**
SICHERHEITSBARCODE
SECURITY BARCODE

(30) Priorité: 05.04.2011 FR 1101010; 06.04.2011 FR 1101027; 13.04.2011 FR 1101124; 21.04.2011 FR 1101244; 21.04.2011 FR 1101245; 07.06.2011 FR 1101726; 21.06.2011 FR 1101900; 28.06.2011 FR 1101986; 29.06.2011 FR 1102012; 01.09.2011 FR 1102649; 31.01.2012 FR 1200276
(43) Date de publication de la demande: 12.02.2014
(73) Titulaire: Guigan, Franck, F-75017 Paris (FR)
(72) Inventeur: Guigan, Franck, F-75017 Paris (FR)
(74) Mandataire: IP Trust
(86) Numéro de dépôt international: PCT/FR2012/000096
(87) Numéro de publication internationale: WO 2012/136902

(56) Documents cités:
- WO-A1-2010/057831
- WO-A2-2005/052650
- US-A1- 2004 112 962
- US-A1- 2010 200 649
- US-A1- 2010 277 805

## Description

### Domaine technique

La présente invention est un procédé d'authentification qui permet de vérifier l'authenticité d'un produit comme par exemple un document imprimé, en comparant les caractéristiques d'un dispositif d'authentification - un code-barres - avec l'enregistrement qui en a été fait préalablement. Elle permet aussi l'authentification sécurisée de cartes impossibles à reproduire, dont il faut avoir l'original en mains pour réaliser des transactions de toutes sortes (ex. paiement).

### Problème posé

Tous les produits et documents sont touchés par la contrefaçon, des instruments de paiement aux produits industriels en passant par les documents officiels et les médicaments. Selon l'Organisation mondiale de la santé (OMS), la contrefaçon des médicaments représente 6 à 10 % du chiffre d'affaires de l'industrie pharmaceutique mondiale et fait courir des risques majeurs à la santé publique, dans le monde entier.

Selon la communication de l'OMS du 2 novembre 2006, annonçant la création du premier groupe spécial international anti-contrefaçon de produits médicaux (IMPACT), *"Les médicaments contrefaits sont des produits dangereux. Ils favorisent les souches de maladies pharmaco-résistantes et sont susceptibles d'aggraver l'état des malades ou de causer leur mort. On les trouve sur tous les marchés et leur nombre augmente au fur et à mesure que les faussaires perfectionnent leurs méthodes, infiltrant les canaux officiels de distribution et utilisant des sites internet illégaux pour vendre leur marchandise.*". Le phénomène a continué à se développer très largement depuis cette communication.

C'est un problème d'autant plus grave qu'il reste sans solution depuis de très nombreuses années, et qu'il s'aggrave. Les solutions proposées sont toutes trop chères pour être applicables aux produits de grande consommation - dont les médicaments de grande diffusion - et à tous les documents imprimés.

La difficulté consiste à permettre à un vérificateur, qui peut être un simple particulier, de comparer un dispositif d'authentification difficile ou impossible à reproduire avec l'enregistrement qui en a été fait avant la mise en circulation du dispositif considéré. Cela doit être fait sans équipement spécifique et très facilement.

Il existe un second problème non résolu qui est majeur : dans l'art antérieur, les méthodes d'authentification de cartes personnelles selon reposent sur des codes dont personne ne peut savoir s'ils n'ont pas été récupérés d'une façon ou d'une autre par un tiers, et aucun moyen n'a été proposé nécessitant d'avoir en mains l'original de la carte comportant un code pour s'identifier sur Internet ou pour payer.

### Art antérieur

La réalisation de dispositifs de sécurité repose depuis longtemps sur un principe qui consiste à utiliser des technologies complexes difficiles à reproduire par les contrefacteurs. La rentabilité des activités des contrefacteurs et en particuliers des faux monnayeurs est cependant telle qu'ils parviennent toujours à contrefaire ces dispositifs. On peut en citer trois exemples :
- WO 2010/042999 A1 (Securency Internat Pty Ltd 2010-04-22) qui décrit un dispositif de sécurité difficile à reproduire comportant un réseau lenticulaire permettant d'obtenir un "moiré grossissant", des "images en déplacement ou flottantes" ou d'autres "effets optiques intéressants".
- EP 2 166 486 A2 (Lumos Technology Co Ltd 2010-03-24) qui décrit un dispositif portable d'extraction d'image (70) pour identifier des images miniatures à l'aide d'une lentille grossissante.
- US 2007/246932 (Heine Astrid et al. 2007-10-25) qui décrit un support de données avec une structure optiquement variable telle que certaines parties du dispositif ne sont visibles que sous un ou plusieurs angles de vision prédéterminés.

L'état de la technique le plus approprié pour atteindre le but recherché par l'invention, est représenté par un document ancien : le brevet GB 2304077A (Farrall 1997-03-12), qui a donné lieu au brevet US 2004/112962 A1 2004-06-17 et qui décrit un dispositif comportant des particules réfléchissantes distribuées aléatoirement. Son auteur explique qu'on peut comparer une description de ces particules avec une description incluse dans une base de données, mais le moyen de lecture proposé est très complexe et spécifique.

Le principe consistant à comparer les caractéristiques d'un dispositif d'authentification avec l'enregistrement qui en a été fait dans une base de données était ainsi imaginé par Farrall dès le 30 juin 1995, date de dépôt de la demande GB 2304077A. Le principe d'un dispositif comportant des particules distribuées aléatoirement, et même des particules réfléchissantes, est lui aussi ancien puisque décrit dans le même document.

Et pourtant, depuis cette date, malgré la gravité du problème à résoudre, malgré une intense activité inventive, des investissements lourds des nombreuses et puissantes sociétés spécialisées dans le domaine technique - il n'est que de constater le nombre de demandes de brevets dans le domaine technique - le problème n'est toujours pas résolu et la contrefaçon progresse.

Aucun des documents plus récents représentatifs de l'état de la technique ne propose de solution répondant véritablement au problème.
- WO/1998/45826 (Slater et Hardman 1998-10-15) décrit une étiquette d'identification constituée par une matrice de plastique solidifié dont l'intérieur comporte une pluralité de perles pouvant être distinguées visuellement et placées au hasard.
- WO/2001/057831 (Bourrières et Kaiser 2001-08-09) décrit un procédé de lecture d'un moyen d'identification volumique unique et non reproductible comprenant un mélange d'au moins deux matériaux distinguables l'un de l'autre, remarquable en ce qu'il consiste d'une part à reconnaître la structure hétérogène interne en deux dimensions dudit moyen d'identification et d'autre part à mettre en évidence et à prouver sa troisième dimension, ce qui rend un leurre impossible. Selon son auteur lui-même, *"L'identification et l'authentification de l'identificateur est faite à l'aide d'un lecteur spécifique qui permet de soumettre l'identificateur à deux éclairages différents et de comparer la signature de l'identificateur présenté avec celle enregistrée dans une base de données. La nécessité de faire appel à un lecteur spécifique est ici encore un frein majeur à l'extension de cette technologie en particulier pour les applications grand public.*".
- WO/2004/054444 A1 (Bourrières et Kaiser 2004-07-1) décrit un procédé d'identification et d'authentification indirect et sans lecteur d'un objet, à l'aide d'un identificateur tridimensionnel rattaché audit objet, l'identificateur présentant des hétérogénéités réparties de façon aléatoire à l'intérieur d'une matière transparente rendant celui-ci difficile ou impossible à reproduire. Ce procédé a l'avantage annoncé de ne pas nécessiter de lecteur, mais il repose entièrement sur la vision humaine et n'est donc pas fiable.
- US 2009/008924 A1 (Ophey Willem Gerard et al - 2009-01-08) décrit un procédé d'authentification d'un dispositif comprenant des particules physiquement détectables noyées dans un substrat. Sa méthode comporte une représentation numérique des propriétés physiques des particules et de leur distribution, mais il ne propose aucun moyen de s'assurer que le dispositif de sécurité n'a pas été remplacé par une photographie d'un dispositif existant.
- US 2010/200649 A1 (Callegari Andrea et al - 2010-08-12) décrit une méthode le marquage reposant sur une distribution aléatoire de particules ayant la propriété de réfléchir la lumière polarisée circulaire, en conjonction avec un équipement d'authentification correspondant. Cela permet une distinction facile du marquage de son support même lorsque ce dernier est de couleur et/ou réfléchissant. Son inconvénient est qu'il rend nécessaire l'utilisation de deux sources de lumière polarisées de façon différentes, et de particules réfléchissant de façon particulière la lumière polarisée circulaire.

L'explication de l'échec de l'art antérieur est simple :
1. Tous les procédés de l'art antérieur ont l'un et/ou l'autre des trois inconvénients suivants :
   - les dispositifs d'authentification utilisés ne peuvent être fabriqués qu'en mettant en oeuvre des moyens rares et couteux, et sont de ce fait trop chers pour être applicables aux produits de grande consommation et aux documents courants ;
   - ou bien ils sont de grande taille, et donc difficiles à intégrer dans un produit ou un document ;
   - ou bien aucune autre méthode n'est proposée pour leur lecture que l'utilisation d'un microscope ou un autre dispositif accessoire coûteux conçu spécialement.
2. Personne n'a proposé une méthode sans faille, bon marché, et qui réponde au besoin qu'ont les professionnels et le grand public de vérifier l'authenticité d'un produit ou d'un document avec un équipement courant comme un téléphone portable.
3. Personne n'a non plus proposé une procédure d'authentification des personnes qui rende obligatoire d'avoir en mains l'original d'une carte, que ce soit en tête à tête ou par Internet, alors que l'usurpation d'identité est l'une des principales sources de fraudes, en particulier sur Internet.

### Exposé de l'invention

La présente invention est un procédé d'authentification tel que revendiqué dans la revendication 1.

### Description sommaire des dessins

L'invention sera bien comprise, et d'autres buts, avantages et caractéristiques de celle-ci apparaîtront plus clairement à la lecture de la description qui va suivre, laquelle est illustrée par les figures 1 à 14.
La figure 1 représente une partie d'un dispositif d'authentification 1 du procédé d'authentification selon l'invention, constitué d'un support d'impression 100 et d'un ensemble codé 11 formant une couche transparente dans laquelle sont noyées des perturbateurs 111, 112 et suivants.
La figure 2 montre une carte de visite protégée par un dispositif d'authentification 1 selon l'invention comportant 4 modules 1A, 1B 1C et 1D situées à proximité des 4 coins ABCD de la carte, la géométrie de ces 4 modules constituant une structure graphique reconnaissable dite marqueur 2.
La figure 3 représente un dispositif d'authentification 1 du procédé d'authentification selon l'invention, constitué d'un support d'impression 100 transparent, d'un ensemble codé 11 formant une couche transparente dans laquelle sont noyées des perturbateurs 111, 112 et suivants, et d'un dispositif optique grossissant 12 optionnel constitué de lentilles optiques 121, 122 et suivantes.
Le marqueur 2 est ici constitué par la surface noire entre lesdites lentilles optiques.
La figure 4 représente un dispositif d'authentification 1 du procédé d'authentification selon l'invention, constitué d'un support d'impression 100, d'un ensemble codé 11 comprenant une couche d'encre réfléchissante d'épaisseur variable constituant lesdits perturbateurs 111, 112 et suivants, et d'un dispositif optique grossissant 12 constitué d'une pellicule transparente 120 et de lentilles optiques 121, 122 et suivantes.
La figure 5 représente un dispositif d'authentification 1 comportant 64 modules 1A, 1B et suivants organisés en un damier de 8 lignes et 8 colonnes. Le marqueur 2 est constitué d'une surface réfléchissante 200 munie en son centre d'une cible 202.
La figure 6 représente la surface réfléchissante 200 d'un dispositif d'authentification 1, dont les bords 200A, 200B et suivants sont réfléchissants et arrondis.
La figure 7 représente un dispositif selon l'invention, composé d'un codes à barres de l'art antérieur 50, de type Datamatrix, complété par 32 modules 1A, 1B, 1C et suivants organisés en une couronne circulaire. Ce dispositif comporte un marqueur 2 sous forme d'une série de deux cercles concentriques qui sont les deux bords de ladite couronne circulaire.
La figure 8 représente un dispositif optique dit multiplicateur d'images 6 fournissant plusieurs images dudit dispositif d'authentification 1. Il est constitué de quatre prismes plans 61, 62, 63 et 64.
La figure 9 représente une lentille optique 121 dont l'iris est délimité par le cercle 1211. Cette lentille focalise sur une surface 1212 dite surface de focalisation, comportant une zone 1213 dite zone significative.
Les figure 10 à 12 montrent la variation de position de ladite surface de focalisation 1212 par rapport à ladite zone significative 1213 correspondant au déplacement dudit moyen d'acquisition 3 par rapport audit dispositif d'authentification 1.
La figure 13 représente un dispositif selon l'invention comportant un marqueur 2, et un moyen d'acquisition 3 comprenant un multiplicateur d'images 6 et un moyen de positionnement 7 qu'il faut faire coïncider avec ledit marqueur carré 2 pour placer ledit moyen d'acquisition 3 audit point de vue original.
La figure 14 représente un dispositif 1 selon l'invention comportant un marqueur 2 composé de deux arêtes saillantes du produit muni dudit dispositif d'authentification 1, et un moyen d'acquisition 3 comprenant un moyen de positionnement composé de deux angles rentrants 71 et 72 qu'il faut faire coïncider avec les arêtes saillantes 21 et 22 formant ledit marqueur 2 pour que ledit moyen d'acquisition 3 soit placé audit point de vue original par rapport audit dispositif 1.

### Description détaillée de l'invention

### Le principe

Le principe de la présente invention consiste à authentifier un dispositif d'authentification 1 en comparant une description dite ultérieure de ce dispositif 1 avec une description dite originale du même dispositif 1. Chacune des caractéristiques du procédé fonctionne en synergie avec les autres pour obtenir une authentification fiable.
- Le regroupements desdits perturbateurs en sous ensembles 1A, 1B et suivants dits modules renvoyant de la lumière de façons sensiblement différentes selon le point de vue sous lequel on les observe confère au dispositif tous les avantages des codes-barres : sa description peut se limiter à la description de chaque module 1A, 1B et suivants sous forme binaire (un module est noté 1 lorsqu'il est clair et 0 lorsqu'il est foncé) ou avec quelques digits seulement représentant sa luminosité et/ou sa couleur.
- La détermination en trois dimensions de la position dans laquelle se trouve ledit moyen d'acquisition 3 par référence audit marqueur 2 du dispositif d'authentification 1 permet de placer ledit moyen d'acquisition 3 audit point de vue original ou à défaut à un emplacement suffisamment proche pour que l'on puisse vérifier qu'au moins une partie importante du dispositif offre un aspect sensiblement identique à celui décrit dans ladite description originale dudit dispositif d'authentification 1. A cet égard, il est important de noter que la précision nécessaire de ce placement dépend de la nature des perturbateurs 111, 112 et suivants, et de celle des modules 1A, 1B et suivants, et que différentes méthodes sont décrites plus bas pour permettre ce placement avec une moindre précision.
- L'acquisition successive de deux images depuis deux emplacements différents permet de vérifier la nature du dispositif d'authentification 1 :
   - la modification de position du moyen d'acquisition 3 et celle de l'éclairage permettent de vérifier que cette modification entraîne bien une modification de l'image perçue et donc de la description, ce qui prouve que le dispositif n'a pas été remplacé par une imitation par exemple photographique ;
   - la modification de l'éclairage permet aussi de neutraliser l'effet de l'éclairage ambiant, et/ou de vérifier les propriétés de réflexion lumineuse des perturbateurs ou de toute autre partie du dispositif.

Avantageusement, les perturbateurs sont assez petits pour qu'un dispositif selon l'invention ne puisse pas être reproduit par un contrefacteur sans que cela engendre des coûts très importants pour chaque reproduction (ou soit même absolument impossible avec les moyens de fabrication connus).

Un avantage important est que le dispositif d'authentification 1 peut être fabriqué avec les équipements et technologies dont disposent déjà les imprimeurs, ceux là mêmes qui sont mis en oeuvre pour fabriquer les documents ou les emballages à protéger. Cela rend marginal le coût de fabrication d'un dispositif d'authentification 1 selon l'invention et permet sa généralisation, en particulier aux médicaments et autres produits de grande consommation, et à un très grand nombre de documents susceptibles d'être falsifiés.

### L'ensemble codé

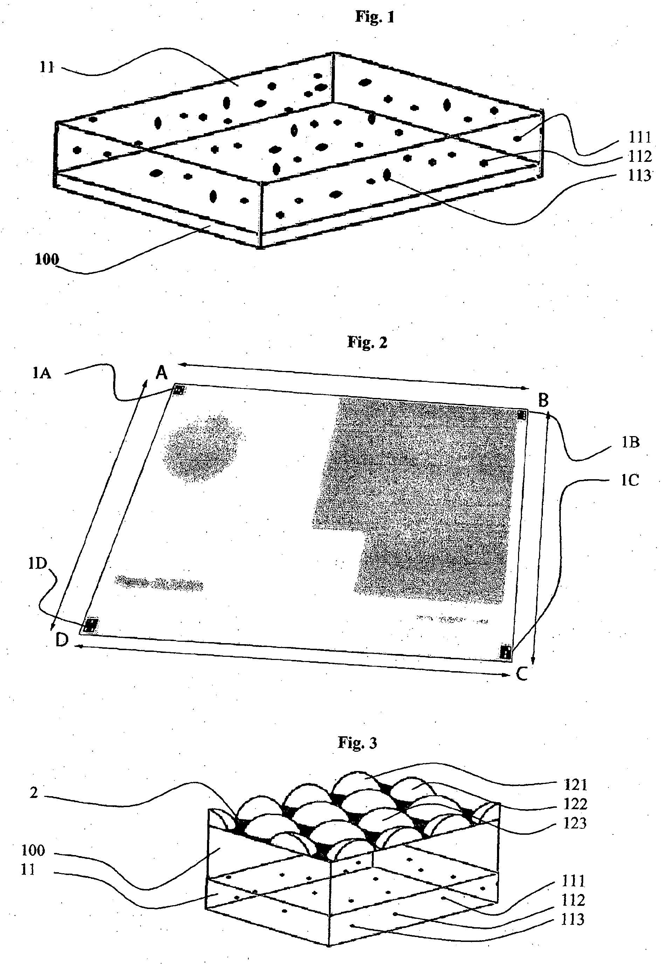

Lesdits perturbateurs peuvent être protégés par une couche de vernis ou imprimés au verso d'un support d'impression transparent. On peut aussi, comme représenté à la figure 1, incorporer des perturbateurs 111, 112 et suivants dans un bloc d'une substance transparente, par exemple une carte en plastique ou un porte-clés.

Une couche de vernis à surface irrégulière réfléchissante peut être combinée avec des perturbateurs placés aléatoirement dans une seconde couche de vernis placée au dessus de la première, pour constituer un ensemble codé 11 très fin et très complexe, donc très difficile à reproduire.

Lesdits modules 1A, 1B et suivants peuvent être contigus, la notion de module étant déterminée au moment de l'établissement de la description, mais il est avantageux qu'ils soient séparés les uns des autres par des surfaces dites de séparation ne comportant pas de perturbateur visible depuis ledit moyen d'acquisition 3. Ces surfaces dites de séparation ont avantageusement au total une surface au moins égale à 5% de la surface totale des modules 1A, 1B et suivants. Ceci permet de ne pas avoir de doute sur l'appartenance d'un perturbateur à l'un ou l'autre desdits modules.

Il peut être avantageux d'imprimer un quadrillage délimitant des cases représentant chacune un desdits modules 1A, 1B et suivants pour masquer lesdits perturbateurs 111, 112 et suivants situés à l'extérieur des zones définies comme constituant lesdits modules.

La couleur desdites surfaces de séparation est un point important. Lorsque les perturbateurs 111, 112 et suivants sont brillants, elle est avantageusement sombre, mais lorsqu'ils ne le sont pas, il est souhaitable que lesdites surfaces de séparation laissent passer de la lumière. Une bonne solution est de rendre ces surfaces translucides pour masquer les perturbateurs situés entre deux modules tout en procurant un bon éclairage des perturbateurs observés.

Lesdits perturbateurs 111, 112 et suivants peuvent être disposés de façon organisée par le concepteur du dispositif. Tout ou partie d'entre eux peuvent aussi avantageusement être répartis de façon aléatoire. Cela procure deux grands avantages :
- ils peuvent être très petits, ce qui empêche leur reproduction.
- ils peuvent être imprimés en grande série avec un système d'impression qui exécute toujours la même fonction d'impression, par exemple en mélangeant les perturbateurs dans une encre translucide ou transparente et en imprimant toujours le même motif avec un plaque offset.

Pour créer une description dite originale, on peut photographier le dispositif d'authentification 1 sur la chaine de fabrication depuis un point de vue déterminé, par exemple avec une caméra située audit point de vue original. Ce point de vue original est déterminé par référence au seul dispositif d'authentification 1 et peut donc être retrouvé ultérieurement.

Une description peut également être réalisée sans prendre de photographie lorsque la disposition des perturbateurs est organisé par le concepteur du dispositif.

Un dispositif d'authentification 1 selon l'invention peut aussi comprendre deux types de cases, d'une part des cases offrant la même apparence quelle que soit la position du moyen d'acquisition 3 et quel que soit l'éclairage, et d'autre part des modules 1A, 1B et suivants selon l'invention, renvoyant de la lumière de façons sensiblement différentes selon le point de vue sous lequel on les observe.

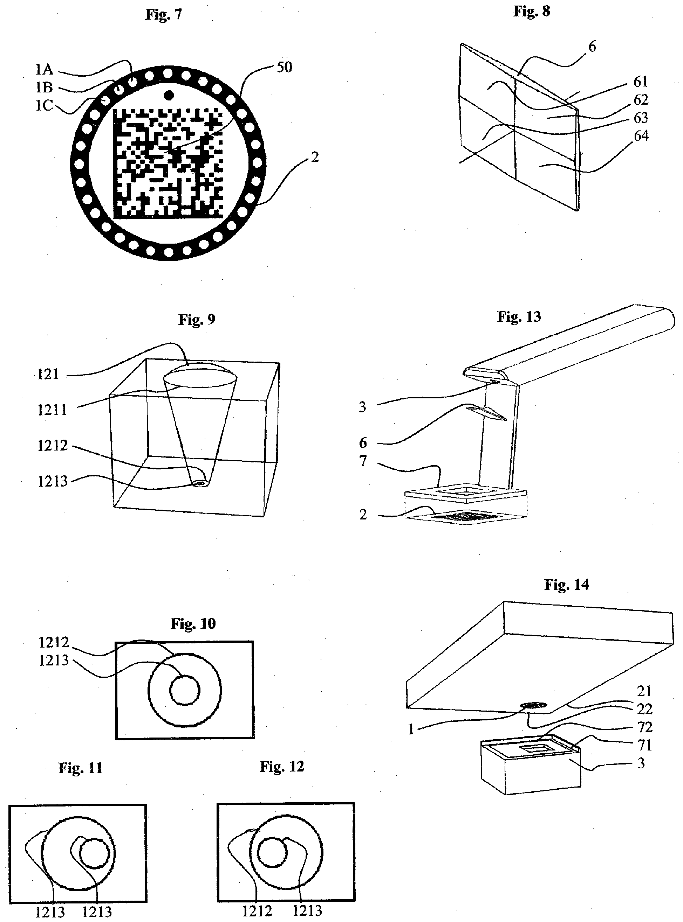

La figure 7 montre un exemple d'un tel dispositif mixte. Au centre se trouve un code 50 de type connu sous le nom de Datamatrix, qui est entouré par une couronne circulaire comportant des modules 1A, 1B et suivants renvoyant de la lumière de façons sensiblement différentes selon le point de vue sous lequel on les observe.

Dans un mode préféré, lesdits perturbateurs 111, 112 et suivants présentent des aspects sensiblement différents selon la direction des rayons lumineux qu'ils reçoivent, par exemple en réfléchissant et ou en polarisant et ou en filtrant différemment la lumière différemment selon la direction de réception de lumière considérée. Cela a pour effet que l'apparence du dispositif d'authentification 1 dépend de la position de l'observateur et aussi de celle de la source lumineuse.

Il faut dans ce cas que la position d'une source de lumière soit la même pour ladite description originale et pour ladite description ultérieure, afin que l'orientation desdits perturbateurs observée lors de la création de ladite description ultérieure soit bien celle prise en compte pour la création de ladite description originale.

Une source lumineuse utilisée pour établir ladite description ultérieure est avantageusement le projecteur de lumière dudit moyen d'acquisition 3, par exemple le flash ou la LED de la caméra ou du smartphone. Certains desdits perturbateurs réfléchissent la lumière dans la direction du moyen d'acquisition 3 et d'autres non.

Il faut noter que l'utilisation de perturbateurs réfléchissant et/ou transmettant la lumière de façons sensiblement différentes selon la direction des rayons lumineux qu'ils reçoivent permet de démultiplier le nombre de descriptions possibles pour un même point de vue, en faisant varier la position de la ou des sources lumineuses tout en conservant le même point de vue.

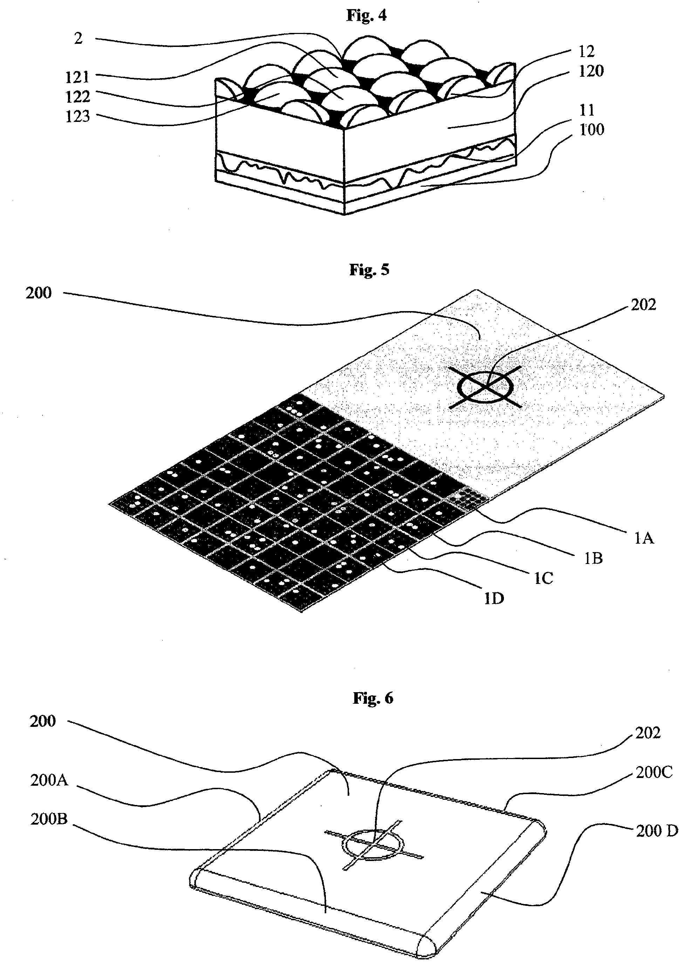

Dans un mode de mise en oeuvre de l'invention représenté à la figure 4, lesdits perturbateurs sont des portions de la surface d'une couche d'un matériau qui réfléchit et/ou transmet la lumière différemment du support d'impression 100 ou de la couche d'encre précédente. Ce peut être par exemple une couche d'encre ou de vernis appliquée sur un support d'impression 100 dont la tension superficielle est inférieure à celle de l'encre ou du vernis considéré au point de chasser cette encre ou ce vernis pour qu'il prenne la forme de taches aléatoires irrégulières sur ledit support d'impression 100.

Ces taches aléatoires irrégulières peuvent être d'épaisseur négligeable, mais aussi d'une épaisseur suffisante pour que le corps des taches et leurs bords réfléchissent la lumière dans des directions différentes. On peut aussi jouer sur les variations d'épaisseur de cette couche pour générer des réflexions dans des directions différentes.

Lesdits perturbateurs peuvent aussi être des lamelles réfléchissantes comme par exemple des paillettes de métal ou de matière plastique revêtues d'un revêtement réfléchissant. Il peut aussi s'agir d'éléments transparents dont l'indice de réfraction est différent de celui du matériau dans lequel elles sont noyées.

L'avantage qu'il y a à utiliser des perturbateurs brillants est que, tout en étant répartis sur une surface plane pour ne former un ensemble d'épaisseur très faible ou négligeable, ils offrent des apparences différentes selon le point de vue d'où on les observe, comme le ferait un dispositif en trois dimensions qui serait beaucoup plus encombrant.

Un second avantage est que l'image saisie est fortement contrastée et facile à analyser quel que soit l'environnement, même lorsque les perturbateurs sont très petits.

Lesdits perturbateurs 111, 112 et suivants sont avantageusement invisibles à l'oeil nu, c'est à c'est à dire d'une dimension maximale inférieure à 85 microns (ce qui équivaut à une résolution de 300DPI, laquelle est habituellement considérée comme la limite du pouvoir séparateur de l'oeil humain situé au *punctum proximum* d'accomodation).

Ils sont avantageusement les plus petits possibles pour que le contrefacteur ait du mal à reproduire un dispositif selon l'invention, si petits qu'il est impossible en utilisant un procédé connu de déposer volontairement un perturbateur dans une position prédéterminée (ceci dans le cas de perturbateurs disposés aléatoirement).

Dans un mode de réalisation préféré représenté à la figure 1, ledit ensemble codé 11 a une épaisseur permettant de placer lesdits perturbateurs à des distances différentes du support d'impression 100, ce qui conduit à une démultiplication considérable du nombre d'images du dispositif d'authentification 1 pouvant être vues depuis des points de vue différents. Pour rendre la contrefaçon plus difficile, il est avantageux que le ledit ensemble codé 11 ait une épaisseur supérieure à celle du plus petit perturbateur utilisé, parce que dans ce cas, des différences de parallaxe apparaissent entre les vues du dispositif d'authentification 1 prises à partir de point de vue différents. Avantageusement, ledit ensemble codé 11 a une épaisseur au moins égale au double de la plus grande dimension du plus petit perturbateur 111 utilisée.

Dans un mode de mise en oeuvre préféré, un au moins desdits perturbateurs 111, 112 et suivants comporte un plan réfléchissant qui n'est pas parallèle avec le plan principal dudit dispositif. Cela rend le dispositif plus difficile à reproduire, car un ensemble de perturbateurs situés dans le même plan peut être simulé par une plaque réfléchissante imprimée.

Certaines des paillettes 111, 112 et suivantes ont avantageusement leur plan principal incliné par rapport au plan principal du dispositif d'authentification 1, pour procurer un reflet depuis un point de vue qui n'est pas situé à la verticale du dispositif lorsque son plan principal est horizontal. Cela facilite l'acquisition d'un dispositif selon l'invention par un moyen d'acquisition 3 dont l'objectif est proche de la source lumineuse, car on peut alors éloigner du dispositif le reflet éventuel de la source lumineuse considérée sur le plan principal.

Le faisceau réfléchi par une paillette 111 a généralement un angle solide très petit, parce que les surfaces de la source lumineuse et de la paillette sont toutes les deux très petites. Il peut en résulter une très grande variabilité de l'image du dispositif 1 perçue par le moyen d'acquisition 3 pour un très léger déplacement de ce dernier.

Lorsque ledit moyen d'acquisition 3 est tenu à la main, il est alors difficile de le positionner assez près dudit point de vue original.

Il est donc avantageux de munir le dispositif d'authentification 1 d'un diffusant optique. Cela a pour effet que le faisceau de lumière réfléchi par un perturbateur 111 sort dudit dispositif d'authentification 1 avec un angle solide plus grand que celui du faisceau entrant dans ledit dispositif et ensuite reçu par ledit perturbateur. Ce diffusant optique peut être une surface dépolie située au recto du dispositif d'authentification 1, mais il est également possible de noyer les perturbateurs dans un vernis qui n'est pas totalement transparent mais translucide, ou un vernis comportant des particules déviant la lumière.

Une autre méthode pour diminuer la précision nécessaire du positionnement dudit moyen d'acquisition 3 consiste à utiliser des perturbateurs 111, 112 et suivantes dont la surface diffuse la lumière qu'elle réfléchit, comme par exemple un dépoli, ou des micro-structures comme un hologramme par réflexion. L'homme de l'art sait concevoir des hologrammes dont au moins un point très petit réfléchit la lumière blanche sous forme d'un faisceau lumineux de longueurs d'onde différentes et d'angle solide plus large que le faisceau reçu. Ce point très petit, qui constitue le perturbateur, a un emplacement très précis au regard du perturbateur contenant cet hologramme, et son positionnement volontaire est donc difficile ou impossible à réaliser par un contrefacteur.

Lesdits perturbateurs 111, 112 et suivants peuvent aussi être des billes transparentes ou translucides. Elles sont avantageusement noyées dans une couche d'encre peu transparente dont l'épaisseur est soit égale soit supérieure à leur diamètre. Une telle bille n'est visible que pour sa partie qui est tangente avec la surface supérieure de l'encre ou proche de cette surface. Cette partie visible, qui constitue le perturbateur, est également toute petite au regard de la dimension de la bille considérée et son emplacement est donc également difficile à déterminer volontairement. La lumière ne peut traverser une bille transparente ou colorée que selon certaines directions selon sa position. La face arrière de l'ensemble codé 11 peut être colorée aléatoirement et/ou réfléchissante.

Dans la mise en oeuvre qui vient d'être décrite, le dispositif selon l'invention peut fonctionner aussi bien avec un éclairage situé de son côté recto que par transparence avec un éclairage situé de son côté verso. L'homme de l'art peut imaginer de très nombreuses autres constructions ayant cette faculté.

Lesdits perturbateurs 111, 112 et suivants peuvent être obtenus par impression d'une encre dont la tension superficielle est supérieure à celle du support d'impression. Cela a pour effet que l'encre se regroupe aléatoirement en gouttes très fines et hautes.

Une forte différence de tension superficielle entre un support d'impression et l'encre a pour inconvénient qui est que l'encre accroche mal sur le support. Pour éviter cet inconvénient, il est avantageux que lesdits perturbateurs 111, 112 et suivants soient recouverts d'un vernis adhérant au support d'impression. Ce vernis assure leur fixation définitive.

Un perfectionnement possible consiste à ce qu'un matériau entrant dans la constitution dudit ensemble codé 11 - comme par exemple celui de certains desdits perturbateurs - devienne visible sous un rayonnement particulier, comme par exemple un rayonnement ultra-violet.

L'homme de l'art peut aussi disposer aléatoirement des matériaux d'indice de réfraction différents ou filtrant des couleurs différentes ou polarisant la lumière entre lesdits perturbateurs et la face extérieure du dispositif d'authentification 1, pour limiter la réflexion de la lumière et/ou pour que le contrefacteur ne puisse pas comprendre la géométrie optique réelle dudit ensemble codé 11 ou de tout autre élément dudit dispositif d'authentification 1.

Pour complexifier le système et rendre plus difficile la contrefaçon, lesdits perturbateurs 111, 112 et suivants peuvent être de formes et/ou de couleurs différentes les unes des autres.

Pour l'application aux jeux et en particulier aux loteries, le dispositif d'authentification 1 peut comporter un moyen permettant d'empêcher de voir clairement tout ou partie dudit ensemble codé 11, ledit moyen ne pouvant pas être remis facilement dans son état d'origine après sa mise hors service. Une solution connue consiste à appliquer une couche d'encre facile à enlever par grattage. Dans ce cas, il est souhaitable de séparer cette couche d'encre grattable de l'ensemble codé 11 par une pellicule résistante. Ceci peut être fait en imprimant la couche grattable sur le recto du dispositif et l'ensemble codé sur son verso.

Dans un mode de mise en oeuvre particulier, le dispositif d'authentification 1 est une étiquette qui se détruit au moins partiellement lors de son décollage. Une telle étiquette est représentée à la figure 5. Cette mise en oeuvre permet de protéger des documents ou produits existants, comme des oeuvres d'art, des bouteilles de grands crus, des pièces détachées pour l'automobile ou l'aviation, ou des documents officiels par exemple.

Dans une version préférée, lesdits perturbateurs 111, 112 et suivants sont mélangés à la colle de ladite étiquette pour que leur organisation soit perturbée lors d'une tentative de décollage. Avantageusement, le pouvoir d'adhésion de la colle sur la partie de l'étiquette comprenant ledit marqueur 2 est inférieur à celui de la colle sur le support sur lequel elle est collée. Ainsi, lors d'une tentative de décollage, lesdits perturbateurs sont désolidarisés de la partie de l'étiquette comprenant ledit marqueur 2.

### Le dispositif optique 12 (optionnel)

Le dispositif d'authentification 1 selon l'invention est avantageusement complété par un dispositif optique 12 comprenant plusieurs dispositifs optiques élémentaires 121, 122 et suivants.

Un tel dispositif optique élémentaire 121 peut être convergent. Cela permet de grossir optiquement les perturbateurs 111, 112 et suivants.

Un dispositif optique élémentaire 121 est par exemple une lentille convexe qui peut être sphérique ou cylindrique, et focaliser sur un plan voisin ou inclus dans ledit ensemble codé 11.

Le dispositif optique grossissant 12 peut répondre à la définition d'un dispositif connu sous le nom de réseau lenticulaire, mais son utilisation est ici détournée : il est utilisé non pas pour produire un effet visuel particulier comme une animation, une représentation photographique en relief, ou un moiré grossissant, ou pour rendre difficile la compréhension de l'organisation dudit ensemble codé 11, mais principalement pour rendre visible à distance certains desdits perturbateurs 111, 112 et suivants. On connait en effet des dispositifs à réseau lenticulaire utilisés dans le cadre de dispositifs de sécurité, comme US-4,417,784 (Knop & Gale 1983-11-29), qui explique qu'en combinant une image codée avec un réseau lenticulaire, l'image codée est difficile à comprendre et donc à reproduire. Ce principe est repris ensuite dans de nombreux documents dont US 5,543,965 (A) (Bielinski & Herber 1996-07-06) qui décrit un affichage lenticulaire auto-stéréoscopique comprenant une image générée par la création d'une pluralité de points aléatoires. Ces dispositifs connus ont l'inconvénient d'être faciles à reproduire par l'homme de l'art muni de l'équipement adapté.

Le premier avantage d'un tel dispositif est de rendre visibles des perturbateurs plus petits, donc d'une organisation d'autant plus difficile à reproduire. Le second est que l'ensemble codé 11 peut avoir une épaisseur très faible ou négligeable, alors que le dispositif d'authentification 1 présente des apparences très différentes selon le point de vue d'où on les observe, comme le ferait un dispositif en trois dimensions qui serait beaucoup plus encombrant.

Les dispositifs optiques convergents 121, 122 et suivants dont le plan focal est situé à proximité immédiate dudit ensemble codé 11 ont chacun pour effet de grossir optiquement lesdits perturbateurs situés dans l'alignement de l'objectif du moyen d'acquisition 3 optique et du centre optique de la lentille considérée, tout en ignorant lesdits perturbateurs voisins. Le décodeur peut ainsi être de plus petite taille tout en offrant une image de même résolution facile à photographier avec une caméra ordinaire.

Un dispositif d'authentification 1 peut être constitué d'un support d'impression 100 transparent, ledit dispositif optique grossissant 12 étant imprimé sur une face dudit support d'impression 100 et ledit ensemble codé 11 sur l'autre face dudit support d'impression 100.

Il peut aussi être constitué d'un ensemble codé 11 imprimé sur un support d'impression 100, et d'un dispositif optique grossissant 12 rapporté sur ledit ensemble codé 11. Ce dispositif optique grossissant 12 peut être constitué d'un film transparent muni de lentilles sur une de ses faces, ledit film étant collé par son autre face sur ledit ensemble codé 11. Ledit film transparent peut aussi être constitué d'une épaisseur de vernis recouverte de lentilles 121, 122 et suivantes pour que la distance entre le foyer d'une lentille et un élément perturbateur soit suffisante.

La distance entre le foyer d'un dispositif optique convergent et un perturbateur est avantageusement inférieure à la distance focale du dispositif optique convergent considéré, mais elle peut aussi être sensiblement égale à cette distance focale ou supérieure. Le point important est que ce dispositif optique magnifie l'apparence de l'élément perturbateur.

Les dispositifs optiques convergents 121, 122 et suivants peuvent être contigus ou espacés les uns des autres, disposés régulièrement ou non, répartis de façon aléatoire, et avoir tous la même focale ou des distances focales différentes les uns des autres, ce qui rend encore plus difficile la copie d'un dispositif d'authentification 1 selon l'invention.

Un dispositif optique élémentaire 121 convergent peut aussi être un miroir concave situé derrière l'ensemble codé 11. Ce mode de mise en oeuvre (non représenté) a l'avantage de permettre la réalisation de dispositifs d'authentification plus fins que ceux utilisant des lentilles convexes. Un dispositif optique élémentaire 121 peut aussi être divergent. Cela permet de diminuer la sensibilité du dispositif aux variations de position dudit moyen d'acquisition 3.

Dans une mise en oeuvre particulièrement recommandée, un module 1A ne comporte qu'un seul dispositif optique élémentaire 121. Cela permet à le module d'avoir un emplacement fixe et bien déterminé, facile à repérer dans l'espace lors de l'analyse de l'acquisition faite par ledit moyen d'acquisition 3, tout en assurant une différence forte entre les apparences des différents modules depuis un point de vue donné.

### La création de ladite description originale

On entend ici par description tout type de fichier informatique réalisé à partir d'une acquisition réalisée soit par simulation informatique, soit par tout moyen d'acquisition 3 optique, comme un appareil photo, une caméra, un scanner, un lecteur de codes à barres, etc.. Il peut s'agir par exemple d'une photographie du dispositif vu dudit point de vue original.

Un dispositif selon l'invention peut avoir l'apparence d'un code-barres 2D comme ceux connus sous le nom de Datamatrix ou de Maxicode ou encore de QR code, à la différence près qu'il propose des informations différentes selon la position de l'observateur.

De nombreuses méthodes différentes peuvent être utilisées pour décrire un module 1A, comme par exemple la luminosité maximale ou minimale ou moyenne, dans une ou plusieurs couleurs des pixels qui le composent. L'utilisation des valeurs minimale ou maximale permet de neutraliser des surfaces ne comportant pas de perturbateur visible depuis ledit moyen d'acquisition 3s et situées en dehors de la zone jugée significative d'un module et de donner des valeurs très différentes à des modules comportant chacun plusieurs perturbateurs.

Une autre façon d'écrire une description consiste en la notation de la luminosité de modules de l'ensemble codé 1 ayant une ou plusieurs caractéristiques communes, par exemple en notant les coordonnées des modules les plus lumineux dans une longueur d'onde convenue.

Une description dite originale peut être renseignée dans ladite base de données lors de la fabrication du dispositif d'authentification 1, mais peut aussi être créée après la mise en service dudit dispositif d'authentification 1.

Cette tâche peut ainsi être confiée à l'utilisateur du dispositif. Le moyen d'acquisition 3 qui servira ensuite à réaliser la description ultérieure a alors exactement les mêmes caractéristiques optiques que celui qui a servi à faire ladite description originale, puisque que c'est le même qui sert aux deux opérations. Cela constitue un avantage supplémentaire.

Dans le cas le plus courant, une description originale du dispositif d'authentification 1 est conservée dans une base de données.

Il est aussi possible que plusieurs descriptions originales du dispositif d'authentification 1, correspondant à des points de vue différents ou à des éclairages différents, soient conservées dans ladite base de données. Cela a pour effet d'augmenter le nombre de combinaisons possibles. Pour rendre la fraude plus difficile, cela demande de réaliser plusieurs comparaisons avec plusieurs descriptions originales, à partir de points de vue ou de caractéristiques d'éclairages qui diffèrent d'une comparaison à la suivante.

Ladite base de données peut être conservée dans la mémoire d'un ordinateur pilotant ledit moyen d'acquisition 3, mais il est aussi possible qu'un ordinateur dit serveur informatique, susceptible de communiquer avec ledit moyen d'acquisition 3, conserve ladite description dite originale et/ou un secret utile à la procédure d'authentification.

Dans ce cas, il faut veiller à la sécurité des communications entre ledit moyen d'acquisition 3 et ledit serveur informatique distant.

L'établissement de ladite description originale peut être suivie du marquage dudit dispositif d'authentification 1 par un élément d'identification dit élément d'identification complémentaire établi à partir de cette description originale. Cet élément d'identification complémentaire peut comporter tout ou partie de ladite description originale.

Il est possible que deux dispositifs d'authentification selon l'invention, en particulier ceux comportant des perturbateurs 111, 112 et suivants répartis de façon aléatoire, se révèlent après fabrication comme étant parfaitement identiques, en ce sens qu'ils donnent lieu à la même description originale. Ils peuvent alors avantageusement être différenciés par un tel marquage. Un faible déplacement dudit moyen d'acquisition 3 peut conduire, pour certains dispositifs très précis, à une modification non souhaitée de la description dite ultérieure. Pour éviter cela, il est avantageux que ladite description originale du dispositif d'authentification 1 soit calculée en tenant compte d'acquisitions multiples dudit dispositif d'authentification 1, correspondant à des points de vue différents ou à des éclairages différents. En réalisant plusieurs acquisitions depuis des points de vue proches dudit point de vue original, on peut faire la différence entre les parties du dispositif 1 qui sont sujettes à de telles variations non souhaitées, et les autres qui peuvent être considérées comme ayant une valeur peu modifiée pour un faible déplacement dudit moyen d'acquisition 3, ci-après dites parties certaines.

Une description originale, issue de ces parties dites certaines, peut ainsi prendre la forme d'un nombre. La procédure de différenciation de dispositifs d'authentification selon l'invention dont la seule acquisition des cellules aléatoires conduirait à la même description originale - exposée ci-avant - permet de rendre ce nombre unique. Il peut alors être utilisé comme l'identifiant unique du dispositif d'authentification 1, et donc du produit ou document auquel il est associé. Avantageusement, une description peut comprendre la définition de ces parties dites certaines, et leur notation. En ignorant les autres parties du dispositif, on obtient une description qui ne dépend pas d'un positionnement imprécis dudit moyen d'acquisition 3 lors d'une acquisition dite ultérieure.

La comparaison entre ladite description ultérieure et ladite description originale ne porte dans ce cas que sur lesdits perturbateurs dont lesdites notations de luminosité obtenues lors desdites deux acquisitions ont des valeurs s'écartant l'une de l'autre d'une différence inférieure à un seuil prédéterminé librement. Le seuil optimal - celui qui correspond à la précision dudit moyen de positionnement du moyen d'acquisition 3 - peut être déterminé facilement par l'homme de l'art. La réalisation de plusieurs acquisitions depuis des points de vue proches dudit point de vue original peut être facilitée si ledit moyen d'acquisition 3 est muni d'un dispositif dit multiplicateur d'images 6 fournissant plusieurs images dudit dispositif d'authentification 1. Un tel dispositif optique multiplicateur d'images 6 est représenté à la figure 8. Il comporte quatre prismes plans 61, 62, 63 et 64. Disposé entre le moyen d'acquisition 3 et le dispositif d'authentification 1 comme représenté à la figure 13, il fournit 4 images dudit dispositif d'identification correspondant à des points de vue différents.

Dans le cas où lesdits perturbateurs 111, 112 et suivants présentent des aspects sensiblement différents selon la direction des rayons lumineux qu'ils reçoivent, chacun des prismes peut être masqué lors d'une prise de vue, par exemple par un dispositif à cristaux liquides, pour que la source lumineuse utilisée ne traverse pas les prismes qui ne correspondent pas au point de vue dont on fait l'acquisition. On réalise 4 alors acquisitions successives.

L'homme de l'art sait juxtaposer un nombre différent de prismes de façon à réaliser des acquisitions depuis un nombre différent de points de vues différents, par exemple 9 ou 16 en juxtaposant 9 ou 16 prismes.

### La procédure d'authentification

Les deux acquisitions dudit dispositif 1 de la procédure d'authentification peuvent être réalisées successivement avec ledit moyen d'acquisition 3 ou simultanément par plusieurs moyens d'acquisition.

La comparaison entre deux acquisitions réalisées l'une avec le seul éclairage ambiant et l'autre avec un éclairage additionnel permet à l'homme de l'art d'en déduire une différence permettant de calculer une description dans laquelle l'effet de l'éclairage ambiant est neutralisé.

Dans ce cas où un dispositif d'authentification 1 selon l'invention comporte un élément dit d'identification complémentaire, la procédure d'authentification peut ne pas nécessiter d'accès à un réseau de télécommunications : ladite description ultérieure est comparée au moins en partie avec tout ou partie dudit élément d'identification complémentaire établi à partir de ladite description originale. Pour éviter qu'un contrefacteur ne fabrique des dispositifs selon l'invention, il est recommandé de crypter ledit élément d'identification de façon asymétrique : une clé privée permettant ce codage n'est pas rendue disponible au public, tandis qu'une clé publique permettant le décryptage par l'application est mise à la disposition du public ou des seules personnes habilitées à réaliser les opérations d'authentification.

### Le positionnement

La détermination de la position en trois dimensions dans laquelle se trouve ledit moyen d'acquisition 3 par référence audit dispositif d'authentification 1 est une étape incontournable de la procédure d'acquisition avec ledit moyen d'acquisition 3.

La position peut être déterminée par des instructions données à l'opérateur, ou par l'utilisation d'un gabarit sur lequel il faut placer ledit moyen d'acquisition 3 comme cela est représenté aux figures 13 et 14. On peut dans ce cas disposer plusieurs moyens d'acquisition et plusieurs sources lumineuses pour ne pas avoir besoin de mettre en oeuvre un moyen mécanique lors de la procédure d'acquisition (versions non représentées).

Dans une version préférée, la procédure d'acquisition commence cependant par une étape de positionnement en trois dimensions qui est assistée par ordinateur.

Le télémètre dont est muni ledit moyen d'acquisition 3 peut permettre de connaître la distance du moyen d'acquisition 3 au dispositif d'authentification 1, mais il est plus simple de mesurer la taille apparente du dispositif, qui est d'autant plus grande que ledit moyen d'acquisition 3 est rapproché dudit dispositif d'authentification 1.

Ladite détermination de la position dans laquelle se trouve ledit moyen d'acquisition 3 par référence audit dispositif d'authentification 1 peut comporter la mesure de la déformation due à la perspective de l'image perçue par ledit moyen d'acquisition 3 de tout ou élément dudit dispositif d'authentification 1, et/ou du produit ou document comportant ce dispositif d'authentification 1. On peut ainsi calculer la position en trois dimensions du moyen d'acquisition 3 par rapport audit dispositif d'authentification 1. Un ordinateur connecté audit moyen d'acquisition 3 peut déduire par calcul la direction du déplacement à appliquer audit moyen d'acquisition 3 pour que ce dernier se rapproche dudit point de vue original. Dans le cas où le moyen d'acquisition 3 est une caméra, le déplacement à lui apporter peut être indiqué par une indication visuelle sur l'écran, et la caméra peut acquérir des images pendant la procédure pour ne conserver *in fine* que la ou les acquisitions souhaitées.

Pour évaluer avec la meilleure précision possible la position dudit moyen d'acquisition 3, il est recommandé d'analyser la déformation due à la perspective de l'image du plus grand constituant possible du document ou produit protégé, par exemple son pourtour s'il s'agit d'une étiquette. On peut aussi placer sur le document ou produit protégé, lors de sa fabrication, des repères dédiés à cette analyse de la déformation de l'image due à la perspective.

Comme illustré par la figure 2, on peut aussi répartir le dispositif d'identification 1 en plusieurs modules 1A, 1B et suivants situés à divers emplacements éloignés les uns des autres, et utiliser l'image perçue de ces emplacements comme marqueur pour évaluer la position dudit moyen d'acquisition 3.

Un marqueur 2 est avantageusement constitué d'un ou plusieurs cercles comme ceux illustrés à la figure 7, qui sont faciles à détecter, et il existe des méthodes connue qui permettent d'analyser facilement leur déformation due à la perspective. Il existe de nombreux procédés en vision 3D qui permettent la détection des primitives par transformation homographique. L'algorithme DLT normalisé est l'un des plus connus de ces procédés, qui résout un ensemble de variables d'un ensemble de relations de similitude. Il élimine le besoin de faire des approximations initiales comme c'est le cas pour des solutions non linéaires.

L'un des procédés connus est décrit par EP 1 143 372 B1. Il s'agit d'un procédé de lecture d'un symbole de code-barres bidimensionnel ayant des modules d'orientation et un motif de recherche comportant un point central, le procédé comprenant notamment l'exécution d'une étape de recherche de modules de données pour calculer des informations de position et de forme pour tous les modules constituant le symbole de code-barres, dont on se dispense dans le cas de la présente invention, pour ne conserver que le balayage du contour de positionnement et la détermination de son point central dans cette image balayée.

Une autre méthode pour déterminer la position dans laquelle se trouve ledit moyen d'acquisition 3 par référence audit dispositif d'authentification 1 consiste à munir ce dernier d'un marqueur 2 qui est une surface réfléchissante 200 comportant une cible 202.

Cette surface réfléchissante 200 peut être incorporée au dispositif, ou bien séparée, amovible et placée sur lui au moment de la prise de vue. Le premier avantage d'une surface réfléchissante 200 amovible est une simplification de la structure du dispositif, car la surface réfléchissante 200 est alors une feuille de plastique transparent ou une plaque de verre. Le second est que l'on peut utiliser une grande surface réfléchissante 200 alors que le produit protégé est très petit, comme par exemple un conditionnement unitaire de médicament.

Ladite détermination de la position dans laquelle se trouve ledit moyen d'acquisition 3 par référence audit dispositif d'authentification 1 comporte avantageusement la détection d'un reflet sur ladite surface réfléchissante 200 d'un élément caractéristique dudit moyen d'acquisition 3 ou d'une source lumineuse solidaire dudit moyen d'acquisition 3.

Ledit point de vue dit original est dans ce cas avantageusement défini par référence audit dispositif d'authcntification 1, comme étant situé sur la droite représentant la réflexion sur ladite surface réfléchissante 200 d'un rayon lumineux issu de cet élément caractéristique 201 et passant par ladite cible 202.

Pour placer ledit moyen d'acquisition 3 audit point de vue original, l'utilisateur n'a besoin que de le déplacer jusqu'à ce qu'il voie cet élément caractéristique 201 en un emplacement convenu de ladite surface réfléchissante 200, par exemple une cible 202.

Lorsque ledit élément caractéristique 201 est ladite source lumineuse, ladite surface réfléchissante 200 peut avoir une qualité de réflexion très pauvre comme par exemple un simple papier couché, puisqu'il suffit que l'utilisateur puisse identifier la position du reflet de ladite source lumineuse sur ladite surface réfléchissante 200. Avantageusement ladite surface réfléchissante 200 est cependant une surface recouverte de vernis brillant.

Ladite surface réfléchissante 200 doit dans de nombreux cas être très petite, pour ne pas occuper trop de place sur le produit ou document à protéger. Un perfectionnement de la présente invention consiste à la munir de surfaces courbes réfléchissantes 200A, 200B et suivantes, qui sont par exemple les bords de ladite surface comme représenté à la figure 6. Le reflet de la source lumineuse sur ces bords arrondis indique la position de la source lumineuse même lorsqu'elle est loin de la position souhaitée, puisqu'il se trouve sur une surface orientée vers un côté lorsque la source lumineuse se trouve éloignée dans la direction correspondant à ce côté. La position du reflet de ladite source lumineuse peut être analysée par un ordinateur afin que l'utilisateur reçoive une instruction simple quant à la direction selon laquelle il doit déplacer ledit moyen d'acquisition 3 pour que ce dernier soit placé audit point de vue original.

Quelle que soit la méthode retenue pour déterminer la position dans laquelle se trouve ledit moyen d'acquisition 3 par référence audit dispositif d'authentification 1, il est avantageux d'aider l'utilisateur à placer ledit moyen d'acquisition 3 à la position correspondant audit point de vue original. La recherche de la meilleure ergonomie conduit à ledit moyen d'acquisition 3 comporte un écran et ce que cet écran affiche un graphisme fixe et un graphisme virtuel indiquant la position dudit point de vue original, indiquant à l'utilisateur la direction dans laquelle il doit déplacer ledit moyen d'acquisition 3 pour le mettre à l'emplacement correspondant audit point de vue original. Le graphisme virtuel est calculé par ordinateur, et peut être affiché dans le vide, de telle sorte qu'il coïncide avec ledit graphisme fixe lorsque ledit moyen d'acquisition 3 est à l'emplacement correspondant audit point de vue original.

### L'acquisition du code

Pour limiter les erreurs d'acquisition, il est particulièrement avantageux que la création d'une description consiste à analyser pour chaque module une surface plus grande que celle du module considéré, ladite surface débordant du module sur une zone ne comportant pas de perturbateur visible depuis ledit moyen d'acquisition 3. Ainsi il est plus probable que la totalité de chaque module sera bien prise en compte.

Les figures 9 à 12 illustrent une organisation du dispositif d'authentification 1 selon l'invention qui permet de limiter la variation de l'image perçue du dispositif par ledit moyen d'acquisition 3 pour un très léger déplacement de ce dernier, dans le cas où le dispositif d'authentification 1 comporte un dispositif optique 12 comprenant lui même plusieurs dispositifs optiques élémentaires convergents 121, 122 et suivants. Selon cette organisation, un dispositif optique élémentaire convergent 121 focalise sur une surface 1212 dite surface de focalisation, laquelle comporte une zone 1213 dite zone significative comportant des perturbateurs, et ladite zone significative est plus petite que ladite surface de focalisation et déborde sur une zone ne comportant pas de perturbateur. Ainsi, lorsque l'on déplace légèrement ledit moyen d'acquisition 3, l'ensemble des perturbateurs pris en compte dans ladite description originale restent visibles à travers le dispositif élémentaire convergent considéré, sans que d'autres perturbateurs ne le deviennent.

La phase d'approche dudit moyen d'acquisition 3 dudit point de vue original est une bonne occasion pour réaliser des acquisitions supplémentaires. Une description peut ainsi être créée et mise en mémoire pendant une phase d'approche dudit moyen d'acquisition 3 dudit point de vue original.

Des descriptions multiples peuvent aussi être établies par l'utilisateur. Des couples [description a, position a], [description b, position b] et suivants sont dans ce cas avantageusement créés et mis en mémoire pendant toute phase d'approche dudit moyen d'acquisition 3 dudit point de vue original.

### La sécurité des télécommunications

Il est particulièrement avantageux que seulement une partie de ladite description ultérieure soit transmise audit serveur informatique aux fins de comparaison. La définition de la partie à transmettre peut être différente pour chaque opération d'authentification, et même faite de façon aléatoire.

Dans une version préférée, un secret est fourni par ledit serveur informatique. La procédure d'authentification ne peut alors pas être faite sans la connexion à ce serveur. Dans une version préférée, ce secret est fourni en temps réel par ledit serveur informatique. Ledit secret peut comporter un algorithme définissant la façon dont tout ou partie de ladite description ultérieure doit être calculée et transmise audit serveur informatique. La définition de la partie de ladite description ultérieure à transmettre audit serveur informatique peut être définie par cet algorithme qui peut être différent de celui utilisé pour la transmission précédente de ladite description ultérieure. Il peut aussi comporter une clé de cryptage.

Il est en particulier recommandé de ne pas fournir aux pirates la définition de la partie transmise, et de crypter cette information avec une clé fournie en temps réel par ledit serveur informatique. Une solution préférée consiste à ce que le secret comporte un code à usage unique. Ce secret peut être crypté par une clé qui est tout ou partie d'un nombre calculé à partir de ladite description ultérieure, laquelle peut être connue dudit serveur informatique.

Pour augmenter la sécurité des opérations d'authentification, il est avantageux que le secret comporte un nombre aléatoire transmis par ledit serveur informatique à l'issue d'une opération de comparaison d'une description dite ultérieure avec une description dite originale, et ce nombre aléatoire est demandé par ledit serveur pour autoriser l'opération de comparaison suivante.

Cette méthode est recommandée dans le cas où un code selon l'invention est utilisé pour créer une carte d'authentification d'une personne, par exemple pour lui permettre d'accéder à des fonctions qui lui sont personnelles sur un site Internet. En effet, un pirate pourrait avoir lu la description du code selon l'invention présent sur la carte, et ensuite simuler l'envoi d'une partie de ce code avec un logiciel contrefaisant. La nécessité d'envoyer un nombre aléatoire reçu lors de l'opération précédente rend nécessaire de voler simultanément l'ordinateur ou le téléphone portable du porteur de la carte. D'autres méthodes connues permettent de vérifier depuis un serveur l'intégrité du logiciel hébergé par ledit moyen d'acquisition 3.

### Les procédures évoluées

Dans certains cas, la procédure d'acquisition avec ledit moyen d'acquisition 3 est avantageusement lancée par une commande comportant directement ou indirectement l'adresse d'un client souhaitant obtenir un résultat de la comparaison de ladite description ultérieure avec ladite description dite originale dudit dispositif d'authentification 1. A titre d'exemple, le client peut être une banque souhaitant certifier l'adresse postale du détenteur d'une facture d'électricité comportant un code selon l'invention. Ce détenteur est ci-après dénommé le facturé. Le code peut soit comporter l'adresse postale dudit facturé, soit un code permettant de l'obtenir d'un serveur de l'émetteur du fournisseur d'électricité. Dans les deux cas, ladite commande demande au facturé de donner la permission au fournisseur d'électricité de transmettre son adresse postale à ladite banque, et l'opération comporte la fourniture à ladite banque d'un lien permettant d'obtenir cette adresse. Ce lien est avantageusement assorti d'un mot de passe à usage unique et à durée de validité limitée.

La procédure d'acquisition avec ledit moyen d'acquisition 3 est avantageusement lancée par une commande contenue dans un fichier ouvert par l'application informatique gérant ladite procédure d'acquisition. Ce fichier peut être reçu par courrier électronique, ou obtenu en cliquant sur un lien. Il suffit que la nature de ce fichier soit associée avec l'application permettant l'authentification d'un code selon l'invention pour que l'opération soit automatisée et devienne très simple à réaliser pour l'utilisateur.

Ladite commande peut être lancée par la lecture d'un code-barres. Ce dernier peut contenir l'adresse d'un client souhaitant obtenir un résultat de la comparaison de ladite description ultérieure avec ladite description dite originale dudit dispositif d'authentification 1, ou l'adresse Internet à laquelle trouver cette adresse.

Ledit code-barres peut être affiché sur l'écran d'un autre ordinateur. Cela permet à un second ordinateur d'en prendre connaissance en acquérant ce code avec sa caméra. C'est un moyen pratique pour transférer des informations d'un ordinateur à un téléphone portable par exemple. Une amélioration de cette méthode consiste à ce que, à l'issue de la comparaison de ladite description ultérieure avec ladite description dite originale dudit dispositif d'authentification 1, ledit serveur informatique émet un lien internet permettant de récupérer une information se rapportant au résultat de cette comparaison.

Pour reprendre l'exemple de la banque et de la facture d'électricité cité plus haut, le fournisseur d'électricité envoie non pas l'adresse du détenteur mais un lien permettant de récupérer cette adresse.

La communication de ce lien peut être accompagné de la fourniture d'une clé de cryptage permettant de décrypter la donnée transférée. Ainsi la donnée ne peut pas être captée par un pirate lors de son transfert.

Cette méthode d'extraction sélective de données apporte une grande nouveauté dans le transfert de données de serveur à serveur, parce qu'elle permet de limiter physiquement la communication de données aux seuls besoins légitimes du bénéficiaire, tels qu'ils sont définis par la loi et par le choix de la personne à laquelle se rapporte la donnée.

Elle est aussi contrôlée et sécurisée puisqu'elle rend nécessaire l'accord de la personne concernée par cette donnée et sécurisée : la présentation d'un document personnel comme une carte ou une facture comportant le code selon l'invention, qui n'est pas reproductible, et le cryptage de la donnée lors de son transfert sur les réseaux de télécommunications.

Ladite base de données peut être renseignée soit avant la mise en service des codes selon l'invention, soit après. Dans cc second cas, une tâche importante est reportée sur le client au lieu d'être faite par le fournisseur du service.

Il faut cependant veiller à ce que n'importe qui ne puisse se faire passer pour un autre, et donner à des codes selon l'invention une valeur frauduleuse.

La méthode retenue est la suivante :
- un dispositif d'authentification 1 est affecté dans ladite base de données à une personne ci-après dénommée utilisateur,
- il est remis audit utilisateur par un moyen connu permettant de s'assurer de l'identité dudit utilisateur, comme par exemple un envoi par courrier recommandé à l'adresse postale dudit utilisateur,
- et ledit utilisateur renseigne ensuite ladite base de données par une information se rapportant à l'objet muni dudit dispositif d'authentification 1.

### Les procédés de fabrication du dispositif d'authentification 1

Il est possible de fabriquer un dispositif selon l'invention par de très nombreux procédés d'impression connus, avec une encre comportant deux matériaux non miscibles, par exemple des perturbateurs solides 111, 112 et suivants noyés dans une encre transparente qui devient solide après polymérisation ou séchage. Ce procédé est compatible avec la quasi-totalité des techniques d'impression à encre liquide ou poudreuse.

On peut aussi pulvériser de l'encre transparente et des perturbateurs, ou des encres de couleurs différentes dont certaines ont la fonction de perturbateur, avec une imprimante à jet d'encre.

On peut aussi imprimer un motif réputé difficile à imprimer comportant par exemple des zones à imprimer ou à ne pas imprimer trop petites, ce qui a pour effet que la capillarité de l'encre entraîne son regroupement sous formes de zones aléatoires.

Une autre méthode consiste à imprimer un dessin sur un support dont la tension superficielle est très basse comparée à celle de l'encre utilisée. Le refus de l'encre la déplace alors selon des règles très complexes difficiles à prévoir et donc à reproduire.

Les procédés décrits ci-dessus ont l'avantage majeur d'être des procédés d'impression qui peuvent être ceux-là mêmes qui sont utilisés pour la fabrication du produit à protéger par le système d'authentification selon l'invention.

Ledit dispositif optique grossissant 12 optionnel peut être obtenu soit par laminage d'une pellicule comprenant une ou plusieurs lentilles convergentes par exemple embossées, soit plus avantageusement par impression de lentilles par application d'un vernis constituant des lentilles, directement sur ledit ensemble codé 11 ou sur une couche intermédiaire de vernis, ou sur une pellicule rapportée.

Trois modes de fabrication principaux sont proposés, et conduisent à des structures différentes d'un dispositif selon l'invention.
- On peut imprimer directement les perturbateurs 111, 112 et suivants sur le document ou produit à protéger, et recouvrir optionnellement l'ensemble d'une couche de vernis comportant optionnellement des dispositifs optiques convergents.
- On peut imprimer les perturbateurs 111, 112 et suivants sur une feuille de papier très fine et fragile, elle-même collée avec une colle forte sur un support siliconé, et recouvrir optionnellement l'ensemble d'une couche de vernis comportant optionnellement des dispositifs optiques convergents. Le dispositif peut être décollé facilement du support siliconé pour être mis en service sur un produit ou document à protéger, mais ensuite, une tentative de décollement se solde inévitablement par une déchirure de la feuille de papier et donc par une destruction de l'ensemble codé 11.
- On peut imprimer les perturbateurs 111, 112 et suivants au verso d'une feuille transparente comportant optionnellement des dispositifs optiques convergents sur son recto. Cette feuille transparente est alors collée par son verso sur un support siliconé avec une colle forte qui peut être avantageusement être l'élément transparent contenant lesdits perturbateurs. L'ensemble codé 11 n'est pas modifié lorsque l'on décolle le dispositif du support siliconé, mais ensuite, une tentative de décollement se solde inévitablement par une destruction de l'ensemble codé 11.

Les dispositifs optiques convergents 121, 122 et suivants dudit dispositif optique grossissant 12 optionnel peuvent être réalisés par tous moyens comme par exemple l'impression d'une encre transparente, selon des techniques connues comme celles décrites par les documents WO/2009/147353 (Guigan & al. 2009-12-10), PCT/11/000315 (P. Guigan 2010-06-30), US-6,833,960 (J.S. Scarbrough 2004-12-21), US-6,856,462 (J.S. Scarbrough 2005-02-15), et US-7,609,451 (J.S Scarbrough 2009-10-27). Dans ce cas, les dispositifs optiques convergents 121, 122 et suivants sont des structures imprimées, et l'ensemble du dispositif d'authentification 1 peut donc être réalisé par un procédé d'impression connu qui peut être celui ayant servi à imprimer le produit ou document que l'on souhaite protéger de la contrefaçon ou de la fraude, ce qui diminue considérablement le cout du dispositif d'authentification 1 jusqu'à le rendre négligeable.

### Applications

Elles dépassent largement celles du marché existant des dispositifs de sécurité :
- Santé : médicaments, ordonnances, certificats, etc.
- Protection des marques : étiquettes, étuis de produits, sceaux d'authentification, boites, cartons, sachets souples, capsules, sacs, blisters, flacons, pots, coffrets, etc.
- Paiement : billets de banque, chèques, cartes de crédit, coupons , etc.
- Billetterie : titres de transport, tickets de spectacles,
- Documents officiels : permis de conduire, permis de résidence, cartes grises, attestations d'assurance, cartes de sécurité sociale, cartes d'identité, passeports, cartes d'électeur, timbres postaux, diplômes, cartes de fidélité ou de membre, tickets de transport ou de spectacle, ordonnances, certificats d'origine, etc.
- Activité économique : papeterie d'entreprise, papier à en-tête, actes et contrats, quittances, bordereaux, relevés de comptes, valeurs mobilières et titres, factures, bulletins de salaire, jugements, bons de commande, certificats, etc.
- Supports d'impression: papier de sécurité pour imprimante de bureau ou prêt à imprimer par des imprimeurs professionnels, etc.
- Tous les produits susceptibles de recevoir une impression : bijoux, montres, pièces détachées et fournitures, électronique grand public, composants et consommables, supports de données (CD, DVD, etc.), étiquettes de vêtements et autres articles de mode, artisanat local, etc.
- Etiquettes prêtes à être collées sur tous objets (tableaux de maître, meubles, vins, bijoux, etc.).
- Divers: jeux et loteries, traçabilité des produits, logistique, etc.
- Appartenance d'un produit à un univers (produits bio, commerce équitable, aliments préparés selon les règles d'une religion, etc.)

L'appel à un serveur central peut être rendu indispensable pour authentifier l'origine d'un produit ou d'un document, et cela peut être l'occasion de créer de l'information statistique permettant de connaître leur destination et même, en rapprochant plusieurs opérations d'authentification réalisées par le même utilisateur, de mieux comprendre le comportement des consommateurs. L'identification sécurisée des personnes, en particulier sur Internet, est l'un des grands domaines d'application de l'invention : le paiement en ligne, l'authentification des courriels et des contrats, le transfert sécurisé de données et de fonds, l'accès sécurisé aux intranets et aux pages personnelles, la communication de clés de cryptage, et plus généralement l'ouverture de droits sur tous types de sites, en particulier bancaires, sociaux, de jeux, etc..

## Revendications

1. Procédé d'authentification consistant à établir une description dite ultérieure d'un dispositif d'authentification (1) comportant un ensemble codé (11) comportant lui-même des éléments perturbateurs (111, 112 et suivants) perturbant la lumière, et à comparer cette description avec une description dite originale dudit dispositif d'authentification (1) pour mesurer la différence entre lesdites descriptions, **caractérisé par le fait :**
- **que** lesdits éléments perturbateurs (111, 112 et suivants) sont regroupés en sous-ensembles (1A, 1B et suivants) dits modules, un module renvoyant de la lumière de façons sensiblement différentes selon le point de vue sous lequel on l'observe,
- **qu'**une description comprend une opération ci-après dénommée acquisition consistant à mesurer avec un moyen d'acquisition (3) la luminosité de plusieurs desdits modules (1A, 1B et suivants), dans une ou plusieurs longueurs d'ondes ou ensembles de longueurs d'onde différents,
- **que** ladite description originale est établie à partir d'une acquisition réalisée depuis un point de vue dit original défini par référence audit dispositif d'authentification (1),
- et **que** la procédure permettant d'établir ladite description ultérieure et de faire ladite comparaison comporte :
- la détermination - par un moyen de positionnement coopérant avec une structure graphique reconnaissable dite marqueur (2) - de la position en trois dimensions dans laquelle se trouve ledit moyen d'acquisition (3) par référence audit dispositif d'authentification (1),
- une acquisition réalisée lorsque ledit moyen d'acquisition (3) est placé à proximité du point de vue original,
- et au moins une acquisition supplémentaire réalisée :
- soit depuis un point de vue sensiblement différent dudit point de vue original,
- soit sous un éclairage différent de celui utilisé pour l'acquisition ayant permis d'établir ladite description originale.

2. Dispositif d'authentification (1) permettant de mettre en oeuvre le procédé d'authentification selon la revendication 1, **caractérisé par le fait qu'**il comporte
- un ensemble codé (11) d'éléments perturbateurs (111, 112 et suivants) regroupés en sous-ensembles (1A, 1B et suivants) dits modules, un module renvoyant de la lumière de façons sensiblement différentes selon le point de vue sous lequel on l'observe,
- et une structure graphique reconnaissable dite marqueur (2) permettant à un moyen de positionnement de déterminer la position dans laquelle se trouve ledit dispositif d'authentification (1) par référence à un moyen d'acquisition (3).

3. Dispositif d'authentification (1) selon la revendication 2, **caractérisé par le fait que** lesdits modules (1A, 1B et suivants) sont séparés les uns des autres par des surfaces de séparation ne comportant pas de perturbateur visible depuis ledit moyen d'acquisition (3), lesdites surfaces de séparation ayant au total une surface au moins égale à 5% de la surface totale des modules (1A, 1B et suivants).

4. Dispositif d'authentification (1) selon la revendication 2, **caractérisé par le fait que** tout ou partie desdits éléments perturbateurs (111, 112 et suivants) sont répartis de façon aléatoire.

5. Dispositif d'authentification (1) selon la revendication 2, **caractérisé en ce que** ledit dispositif comprend deux types de cases, d'une part des cases offrant la même apparence quelle que soit la position du moyen d'acquisition (3) et quel que soit l'éclairage, et d'autre part des cases qui sont lesdits modules (1A, 1B et suivants).

6. Dispositif d'authentification (1) selon la revendication 2, **caractérisé en ce que** lesdits éléments perturbateurs (111, 112 et suivants) présentent des aspects sensiblement différents selon la direction des rayons lumineux qu'ils reçoivent.

7. Dispositif d'authentification (1) selon la revendication 2, **caractérisé en ce qu'**il comporte un diffusant optique.

8. Dispositif d'authentification (1) selon la revendication 2, **caractérisé en ce qu'**il ai une étiquette qui se détruit au moins partiellement lors de son décollage.

9. Dispositif d'authentification (1) selon la revendication 8, **caractérisé par le fait que** lesdits éléments perturbateurs (111, 112 et suivants) sont mélangés à la colle de ladite étiquette.

10. Procédé d'authentification selon la revendication 1, **caractérisé par le fait qu'**une description originale du dispositif d'authentification (1) est conservée dans une base de données et que plusieurs descriptions originales du dispositif d'authentification (1), correspondant à des points de vue différents ou à des éclairages différents, sont conservées dans ladite base de données.

11. Procédé de fabrication de dispositifs d'authentification selon la revendication 2, **caractérisé en ce que** l'établissement de ladite description originale est suivie du marquage dudit dispositif d'authentification (1) par un élément d'identification complémentaire établi à partir de cette description originale, et_que, dans le cas où il apparait que deux dispositifs ont la même description originale correspondant au même point de vue, ils sont différenciés par un tel marquage.

12. Procédé d'authentification selon la revendication 1, **caractérisé par le fait que** ladite description originale du dispositif d'authentification (1) est calculée en tenant compte d'au moins deux acquisitions dudit dispositif d'authentification (1), correspondant à deux points de vue différents ou à deux éclairages différents.

13. Procédé d'authentification selon la revendication 1, **caractérisé par le fait qu'**une description est créée et mise en mémoire pendant une phase d'approche dudit moyen d'acquisition (3) dudit point de vue original.

14. Procédé d'authentification selon la revendication 10, **caractérisé par le fait qu'**il existe un serveur informatique, susceptible de communiquer avec ledit moyen d'acquisition (3), dans lequel est conservée ladite description originale et/ou un secret utile à la procédure d'authentification, et qu'un secret est fourni par ledit serveur informatique.

15. Procédé d'authentification selon la revendication 14, **caractérisé par le fait que** le secret comporte un nombre aléatoire transmis par ledit serveur informatique à l'issue d'une opération de comparaison d'une description ultérieure avec une description originale, et que ce nombre aléatoire soit demandé par ledit serveur pour autoriser l'opération de comparaison suivante.

16. Procédé d'authentification selon la revendication 1, **caractérisé en ce que** le regroupement desdits éléments perturbateurs (111, 112 et suivants) en sous-ensembles (1A, 1B et suivants) est effectué au moment de l'étape d'établissement d'une description.

## Patentansprüche

1. Authentifizierungsverfahren bestehend aus der Erstellung einer sogenannten späteren Beschreibung einer Authentifizierungsvorrichtung (1), welche eine codierte Einheit (11) mit lichtstörenden Elementen (111, 112 ff.) umfasst, und aus dem Vergleich dieser Beschreibung mit einer sogenannten Originalbeschreibung besagter Authentifizierungsvorrichtung (1) zur Messung des Unterschieds zwischen besagten Beschreibungen, **dadurch gekennzeichnet, dass**:
- besagte störende Elemente (111, 112 ff.) in Untereinheiten (1A, 1B ff.), in sogenannte Module, zusammengefasst sind, wobei ein Modul das Licht auf eine je nach Perspektive im Wesentlichen unterschiedliche Art zurücksendet,
- eine Beschreibung einen Vorgang umfasst, der nachstehend Erfassung genannt wird und darin besteht, mit einem Erfassungsmittel (3) die Helligkeit mehrerer der besagten Module (1A, 1B ff.) in einer oder mehreren Wellenlängen oder Einheiten unterschiedlicher Wellenlängen zu messen,
- besagte Originalbeschreibung durch die Erfassung von einer sogenannten ursprünglichen Perspektive aus erstellt wird, die unter Bezugnahme auf besagte Authentifizierungsvorrichtung (1) definiert wird,
- und dadurch, dass das Verfahren zur Erstellung besagter späterer Beschreibung und zur Durchführung des Vergleichs folgendes umfasst:
- die dreidimensionale Bestimmung der Position, in welcher sich besagtes Erfassungsmittel (3) in Bezug auf besagte Authentifizierungsvorrichtung (1) befindet durch ein Positionierungsmittel, welches mit einer grafisch wieder erkennbaren Struktur, einem sogenannten Marker (2), zusammenwirkt,
- eine Erfassung, die erfolgt, wenn besagtes Erfassungsmittel (3) in der Nähe der ursprünglichen Perspektive platziert ist,
- und mindestens eine zusätzliche Erfassung, die:
- entweder aus einer Perspektive erfolgt, die im Wesentlichen von der ursprünglichen Perspektive abweicht,
- oder unter einer Beleuchtung, die von der bei der Erfassung zwecks Erstellung besagter Originalbeschreibung benutzten Beleuchtung abweicht.

2. Authentifizierungsvorrichtung (1), welche die Anwendung des Authentifizierungsverfahrens nach Anspruch 1 ermöglicht, **dadurch gekennzeichnet, dass** sie folgendes umfasst:
- eine verschlüsselte Einheit (11) an störenden Elementen (111, 112 ff.), die in Untereinheiten (1A, 1B ff.), in sogenannten Modulen zusammengefasst ist, wobei ein Modul das Licht je nach dem, von welcher Perspektive aus man es beobachtet, auf im Wesentlichen unterschiedliche Art zurücksendet,
- und eine wiedererkennbare grafische Struktur, ein so genannter Marker (2), der einem Positionierungsmittel die Bestimmung der Position, in welcher sich besagte Authentifizierungsvorrichtung (1) in Bezug auf ein Erfassungsmittel (3) befindet, ermöglicht.

3. Authentifizierungsvorrichtung (1) nach Anspruch 2, **dadurch gekennzeichnet, dass** besagte Module (1A, 1B ff.) durch Trennflächen voneinander getrennt sind, die von besagtem Erfassungsmitteln (3) aus betrachtet kein sichtbares störendes Element umfassen, wobei besagte Trennflächen insgesamt eine Fläche kleiner/gleich 5 % der Gesamtfläche der Module (1A, 1B ff.) haben.

4. Authentifizierungsvorrichtung (1) nach Anspruch 2, **dadurch gekennzeichnet, dass** die besagten störenden Elemente (111, 112 ff.) ganz oder teilweise willkürlich verteilt sind.

5. Authentifizierungsvorrichtung (1) nach Anspruch 2, **dadurch gekennzeichnet, dass** besagte Vorrichtung zwei Arten von Felder aufweist, zum einen Felder, welche immer gleich aussehen unabhängig von der Position des Erfassungsmittels (3) und unabhängig von der Beleuchtung, und zum anderen Felder, bei denen es sich um besagte Module (1A, 1B ff.) handelt.

6. Authentifizierungsvorrichtung (1) nach Anspruch 2, **dadurch gekennzeichnet, dass** besagte störende Elemente (111, 112 ff.) im Wesentlichen je nach Richtung der auf sie eintreffenden Lichtstrahlen unterschiedlich aussehen.

7. Authentifizierungsvorrichtung (1) nach Anspruch 2, **dadurch gekennzeichnet, dass** sie einen optischen Diffusor umfasst.

8. Authentifizierungsvorrichtung (1) nach Anspruch 2, **dadurch gekennzeichnet, dass** sie ein Etikett aufweist, dass während des Ablösens zumindest teilweise zerstört wird.

9. Authentifizierungsvorrichtung (1) nach Anspruch 8, **dadurch gekennzeichnet, dass** besagte störende Elemente (111, 112 ff.) mit dem Kleber des besagten Etiketts vermischt sind.

10. Authentifizierungsverfahren nach Anspruch 1, **dadurch gekennzeichnet, dass** eine Originalbeschreibung der Authentifizierungsvorrichtung (1) in einer Datenbank aufbewahrt wird und dadurch, dass in besagter Datenbank mehrere Originalbeschreibungen der Authentifizierungsvorrichtung (1), die den unterschiedlichen Perspektiven oder Beleuchtungen entsprechen, aufbewahrt werden.

11. Verfahren zur Herstellung von Authentifizierungsvorrichtungen nach Anspruch 2, **dadurch gekennzeichnet, dass** auf die Erstellung der besagten Originalbeschreibung die Markierung der besagten Authentifizierungsvorrichtung (1) durch ein ergänzendes Identifizierungselement folgt, das mithilfe dieser Originalbeschreibung erstellt wird, und dadurch, dass im Falle zweier Vorrichtungen mit ein und derselben Originalbeschreibung, die aus ein und derselben Perspektive aus erstellt wurde, diese durch eine solche Markierung unterschieden werden.

12. Authentifizierungsverfahren nach Anspruch 1, **dadurch gekennzeichnet, dass** besagte Originalbeschreibung der Authentifizierungsvorrichtung (1) unter Berücksichtigung von mindestens zwei Erfassungen der besagten Authentifizierungsvorrichtung (1) berechnet wird, welche zwei unterschiedlichen Perspektiven oder zwei unterschiedlichen Beleuchtungen entsprechen.

13. Authentifizierungsverfahren nach Anspruch 1, **dadurch gekennzeichnet, dass** in einer Annäherungsphase des besagten Erfassungsmittels (3) an die Originalperspektive eine Beschreibung erstellt und gespeichert wird.

14. Authentifizierungsverfahren nach Anspruch 10, **dadurch gekennzeichnet, dass** es einen EDV-Server gibt, der mit besagtem Erfassungsmittel (3) kommunizieren kann und in welchem besagte Originalbeschreibung und/oder ein für das Authentifizierungsverfahren zweckmäßiger Geheimcode aufbewahrt wird, und dadurch, dass ein Geheimcode über besagten EDV-Server bereitgestellt wird.

15. Authentifizierungsverfahren nach Anspruch 14, **dadurch gekennzeichnet, dass** der Geheimcode eine willkürliche Zahl umfasst, die von besagtem EDV- Server nach dem Vergleich einer späteren Beschreibung mit einer ursprünglichen Beschreibung übermittelt wird, und dadurch, dass diese willkürliche Zahl von besagtem Server zur Autorisierung des folgenden Vergleichsvorgangs angefordert wird.

16. Authentifizierungsverfahren nach Anspruch 1, **dadurch gekennzeichnet, dass** die Zusammenfassung bestimmter störender Elemente (111, 112 ff.) in Untereinheiten (1A, 1B ff.) in der Phase der Erstellung einer Beschreibung durchgeführt wird.

## Claims

1. An authentication method consisting in establishing a description, also referred to as subsequent, of an authentication device (1) comprising an encoded set (11) which in turn comprises disrupting elements (111, 112 et seq.) which disrupt light, and in comparing this description with a description, also referred to as original, of said authentication device (1) for measuring the difference between said descriptions, **characterized in that**:
- said disrupting elements (111, 112 et seq.) are grouped in sub-assemblies (1A, 1B et seq.) also referred to as modules, with a module returning light in substantially different ways depending on the view point from which it is observed,
- a description comprises one operation, hereinafter referred to as an acquisition, which consists in measuring, using measuring means (3), the brightness of a plurality of said modules (1A, 1B et seq.), in one or more wavelengths or different wavelengths sets,
- said original description is established from an acquisition from a view point, also referred to as original, defined by reference to said authentication device (1),
- and **in that** the procedure making it possible to establish said subsequent description and to make said comparison comprises:
- determining -using said positioning means interacting with a recognizable graphical structure, also referred to as the marker (2)- the three-dimensional position where said acquisition means (3) is located with reference to said authentication device (1),
- an acquisition made when said acquisition means (3) is positioned close to the original view point,
- and at least one additional acquisition made:
- either from a view point substantially different from the original view point,
- or in a light different from the one used for the acquisition which made it possible to establish said original description.

2. An authentication device (1) for implementing the authentication method according to claim 1, **characterized in that** it comprises
- an encoded set (11) of disrupting elements (111, 112 et seq.) grouped in sub-assemblies (1A, 1B et seq.), also referred to as modules, with a module returning light in substantially different ways depending on the view point from which it is observed,
- and a recognizable graphic structure 2, also referred to as the marker (2), enabling a positioning means to determine the position where said authentication device (1) is located with reference to an acquisition means (3).

3. An authentication device (1) according to claim 2, **characterized in that** said modules (1A, 1B et seq.) are separated from each other by separation surfaces which comprise no disruptor visible from said acquisition means (3), with said separation surfaces having a total surface area at least equal to 5% of the total surface of the modules (1A, 1B et seq.).

4. An authentication device (1) according to claim 2, **characterized in that** all or part of said disrupting elements (111, 112 et seq.) are randomly distributed.

5. An authentication device (1) according to claim 2, **characterized in that** said device comprises two types of boxes, on the one hand, boxes with the same appearance regardless of the position of the acquisition means (3) and regardless of the lighting, and on the other hand, boxes which are said modules (1A, 1B et seq.).

6. An authentication device (1) according to claim 2, **characterized in that** said disrupting elements (111, 112 et seq.) have substantially different aspects depending on the direction of the light beams they receive.

7. An authentication device (1) according to claim 2, **characterized in that** it includes an optical diffuser.

8. An authentication device (1) according to claim 2, **characterized in that** it has one label which at least partially self-destructs when removed.

9. An authentication device (1) according to claim 8, **characterized in that** said disrupting elements (111, 112 et seq.) are mixed with the adhesive on said label.

10. An authentication method according to claim 1, **characterized in that** an original description of the authentication device (1) is stored in a database and that a plurality of original descriptions of the authentication device (1), corresponding to different view points or different lights, are stored in said database.

11. A method for producing authentication devices according to claim 2, **characterized in that** the establishment of said original description is followed by the marking of said authentication device (1) by an additional identification element established from the original description, and **in that**, in the case where it appears that two devices have the same original description corresponding to the same view point, they are differentiated by such marking.

12. An authentication method according to claim 1, **characterized in that** said original description of the authentication device (1) is calculated while taking into account at least two acquisitions by said authentication device (1), which correspond to two different view points or two different lights.

13. An authentication method according to claim 1, **characterized in that** a description is created and stored during an phase of approach, by said acquisition means (3), of said original view point.

14. An authentication method according to claim 10, **characterized in that** a computer server is provided, which is liable to communicate with said acquisition means (3), in which said original description and/or a secret useful for the authentication procedure is/are stored, and **in that** a secret is provided by said computer server.

15. An authentication method according to claim 14, **characterized in that** the secret comprises a random number transmitted by said server computer upon completion of an operation of comparison of a subsequent description with an original description, and **in that** this random number is requested by the server to authorize the next comparison operation.

16. An authentication method according to claim 1, **characterized in that** said disrupting elements (111, 112 et seq.) are grouped in sub-assemblies (1A, 1B et seq.) during the step of establishing a description.
